# EUROPEAN PATENT APPLICATION

(11) **EP 1 361 118 A2**
(43) Date of publication of application: **12.11.2003**
(21) Application number: 03009786.9
(22) Date of filing: 09.05.2003
(51) Int. Cl.: B60R 21/01

(54) **Apparatus for controlling vehicle**

(30) Priority: 10.05.2002 JP 2002135221
(71) Applicant: Hitachi, Ltd., Chiyoda-ku, Tokyo 101-8010 (JP)
(72) Inventor: Nakazawa, Terumi, Hitachi Ltd., Chiyoda-ku, Tokyo 100-8220 (JP); Oouchi, Shiro, Hitachi Ltd., Chiyoda-ku, Tokyo 100-8220 (JP)
(74) Representative: Beetz & Partner Patentanwälte

(57) **Abstract**

The invention relates to an apparatus for controlling a vehicle (50) which can perform proper vehicle control and can issue a proper warning without causing abrupt behaviors of a vehicle. A plurality of range sensors (1; 1A, 1B; 2-8) are installed in an outer peripheral portion of a vehicle (50) for sensing a target object including another vehicle. The controller includes a sensor signal failure/ deterioration determining circuit (70) to select, of signals outputted from the plurality of range sensors, a signal from at least one range sensor, which is neither failed nor deteriorated in sensor characteristics, for control using the selected signal with priority. A warning is issued to a driver when the target object, e.g., another vehicle, comes into a preset danger detection area. When the range sensors are installed in front and rear portions of the vehicle (50), control is carried out using a signal from at least one range sensor with priority, which is positioned on the same side as a steering wheel. When the range sensors are installed on both lateral sides of the vehicle, control is carried out using a signal from at least one range sensor with priority, which has detected a shorter distance from the target object.

## Description

### BACKGROUND OF THE INVENTION

### 1. Field of the Invention

The present invention relates to an apparatus for carrying out vehicle control, i.e., safety control, by utilizing signals from a plurality of range sensors. More particularly, the present invention relates to an apparatus for controlling a vehicle including a plurality of range sensors, which can make control using some of the signals from the plurality of range sensors with priority and can realize proper control.

### 2. Description of the Related Art

As that type of obstacle sensor for a vehicle, there is known an obstacle sensor for a vehicle disclosed in Japanese Unexamined Patent Application Publication No. 10-282233. With the disclosed obstacle sensor, an obstacle around a vehicle is detected by two front and two rear obstacle sensing means capable of detecting the direction of and the distance to the obstacle, and when the obstacle is detected, a voice generating means is operated to notify a driver of a warning. On that occasion, the voice generating means disposed in a direction oriented to the detected obstacle is operated to notify the driver of a warning from the direction of the detected obstacle. Accordingly, the driver can surely recognize the direction of the detected obstacle.

### SUMMARY OF THE INVENTION

However, the above-cited publication disclosing the obstacle sensor for the vehicle, which has the structure described above, includes no suggestions regarding a priority process of signals from the obstacle sensing means. In other words, if the technique disclosed in the above-cited publication is directly applied to the vehicle, a disadvantage occurs in that proper ones of the obstacle sensing means cannot be utilized depending on various situations. In the case of the vehicle running on a curved road, for example, if an obstacle around the vehicle is detected using the signals from all of the obstacle sensing means as with the case of the vehicle running on a straight road, there is a limit in cutting down a time from the detection of an obstacle to issuance of a warning to the driver.

Further, when characteristics of any of the obstacle sensing means are deteriorated, problems arise in that cutting-down of the time until the issuance of a warning is limited and, in the worst case, it becomes impossible to issue a warning itself. Those problems cause a delay in vehicle control. In other words, a delay in detection causes a delay in automatic vehicle control, and a delay in issuance of a warning causes a delay in manual vehicle control. Accordingly, abrupt steering and abrupt braking are necessitated.

In view of the problems set forth above, it is an object of the present invention to provide an apparatus for controlling a vehicle, which can perform proper vehicle control and can issue a proper warning without causing abrupt behaviors of a vehicle. Another object is to provide an apparatus for controlling a vehicle, which can perform proper vehicle control and can ensure stable running while the vehicle is running on not only a straight road, but also a curved road.

To achieve the above object, according to one aspect, the present invention can provides an apparatus for controlling a vehicle which may comprise at least one range sensor installed in an outer peripheral portion of a vehicle for sensing a target object including another vehicle, comprising a controller for carrying out control using, of signals outputted from the at least one range sensor, a signal from at least one range sensor with priority, which is neither failed nor deteriorated in sensor characteristics. The range sensors may be installed in upper and lower portions of the vehicle as an occasion requires.

With that feature, because of the control being carried out using the signal from at least one range sensor with priority, which is neither failed nor deteriorated in sensor characteristics, even when any of the range sensors is failed, for example, another suitable range sensor can be used instead to take an action to avoid a collision. Further, since the control is carried out using the signal from at least one range sensor with priority, which is not deteriorated in sensor characteristics, a target object positioned around the vehicle can be accurately detected in a shorter time. Hence, a danger such as a collision can be avoided with proper control and stable running can be achieved without causing abrupt behaviors of the vehicle.

According to another aspect, the present invention provides an apparatus for controlling a vehicle which may comprise at least one range sensor installed in an outer peripheral portion of a vehicle for sensing a target object including another vehicle, comprising a controller for carrying out control using, of signals outputted from the at least one range sensor, a signal from at least one range sensor with priority, which is positioned on the same side as a direction of turn of a steering wheel, when processing the signals from the range sensors installed in front and rear portions of the vehicle. With that feature, when controlling the vehicle using the range sensors installed in the front and rear portions of the vehicle, the control is carried out using the signal from at least one range sensor with priority, which is positioned on the same side as the direction of turn of the steering wheel. Therefore, a target object positioned ahead of or behind the vehicle can be detected in a shorter time. Hence, a danger such as a collision can be avoided with proper control and safety of the driver in the event of a collision can be improved, whereby stable running can be achieved.

According to still another aspect, the present invention provides an apparatus for controlling a vehicle which can comprise at least one range sensor installed in an outer peripheral portion of a vehicle for sensing a target object including another vehicle, comprising a controller for carrying out control using, of signals outputted from the at least one range sensor, a signal from at least one range sensor with priority, which has detected a shorter distance from the target object, when processing the signals from the range sensors installed on both lateral sides of the vehicle. With that feature, a target object, such as another oncoming vehicle positioned laterally of the relevant vehicle, can be quickly detected to carry out prompt control. Hence, safety in the event of a collision in the lateral direction of the vehicle can be improved and stable running can be achieved.

According to still another aspect, the present invention provides an apparatus for controlling a vehicle which can comprise at least one range sensor installed in an outer peripheral portion of a vehicle for sensing a target object including another vehicle, comprising a controller for carrying out control using, of signals outputted from the at least one range sensor, a signal from at least one range sensor with priority, which is installed on the lateral side of the vehicle nearer to a lane to which the vehicle is going to move, when the vehicle changes a lane. With that feature, when the vehicle changes a lane, the control is carried out using the range sensor positioned nearer to the lane to which the vehicle is going to move. During the lane change, therefore, another vehicle running in the same direction side by side can be quickly detected and safety in the event of a collision in the lateral direction can be improved, whereby stable running can be achieved.

In one preferred specific form of the apparatus for controlling the vehicle of the present invention, the vehicle includes a vehicle speed sensor, ones of the plurality of range sensors, which are installed in a front portion of the vehicle, comprise a far-range sensor and a near-range sensor, and the controller includes a switchover unit for switching over the far-range sensor and the near-range sensor from one to the other depending on an output signal of the vehicle speed sensor when processing the signals from the plurality of range sensors. With those features, a time required for determination to start the control to avoid a collision can be cut down, for example, by carrying out the control using the far-range sensor when the vehicle speed is high, and using the near-range sensor when the vehicle speed is low. As a result, stable control can be achieved.

In another preferred specific form of the apparatus for controlling the vehicle of the present invention, the range sensors installed in the front and rear portions of the vehicle are built in headlamps and tail lamps. With that feature, the range sensors can be installed with a simpler construction, and the operation is stabilized because the range sensors are kept from being directly exposed to wind, rain, etc. The range sensors are preferably optical sensors, radar sensors, or infrared sensors. As a result, the distance between the vehicle and another target object can be detected with high accuracy and the operation is stabilized.

In the above apparatus for controlling the vehicle, preferably, a warning is issued to a driver when another target object comes into a danger detection area preset for the range sensors. Practically, it is preferable that the warning be issued to the driver using sound, light, vibration, or any suitable combination thereof. With those features, since the warning is issued to the driver using sound, light, vibration, or any suitable combination thereof when another target object comes into the danger detection area, the driver can take an action to avoid a danger, such as a collision, with safety based on the warning.

### BRIEF DESCRIPTION OF THE DRAWINGS

Fig. 1 is a schematic plan view of a first example of a vehicle in which a plurality of range sensors constituting an apparatus for controlling a vehicle of the present invention are installed;
Fig. 2 is a schematic plan view of a second example of the vehicle in which a plurality of range sensors are installed;
Fig. 3 is a schematic plan view of a third example of the vehicle in which a plurality of range sensors are installed;
Fig. 4 is a schematic plan view of a fourth example of the vehicle in which a plurality of range sensors are installed;
Fig. 5 is a block diagram of a signal processing circuit used in the vehicle of Fig. 1;
Fig. 6 shows an operative state of the range sensors when the vehicle of Fig. 1 changes a lane to the right; and
Fig. 7 is a block diagram of a signal processing circuit used in the vehicle of Fig. 2 and switching over signals depending on a vehicle speed.

### DESCRIPTION OF THE PREFERRED EMBODIMENTS

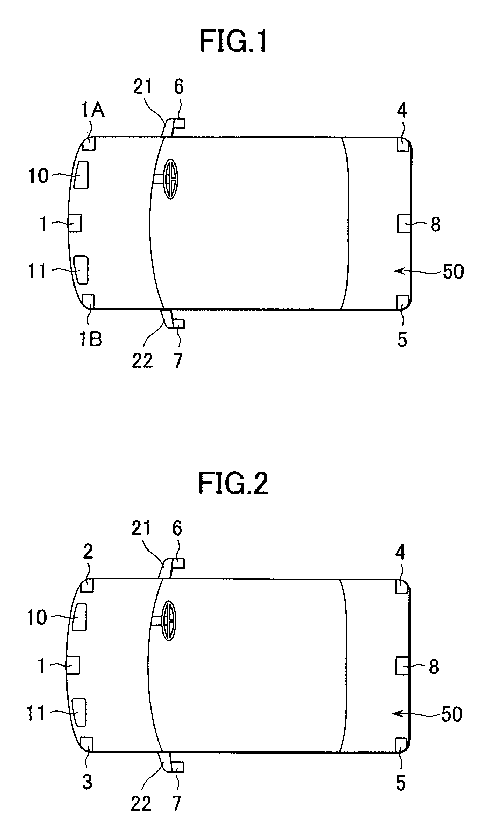

A preferred embodiment of an apparatus for controlling a vehicle according to the present invention will be described below in detail with reference to the accompanying drawings. Fig. 1 is a schematic plan view of a first example of a vehicle in which a plurality of range sensors constituting the embodiment of the apparatus for controlling the vehicle are installed. In Fig. 1, a vehicle 50 includes a far-range sensor 1 installed in its front central portion, and far-range sensors 1A, 1B installed respectively on the right and left sides adjacent to headlamps 10, 11. In a rear portion of the vehicle 50, as in the front portion, a far-range sensor 8 is installed at the center and near-range sensors 4, 5 are installed respectively on the right and left sides.

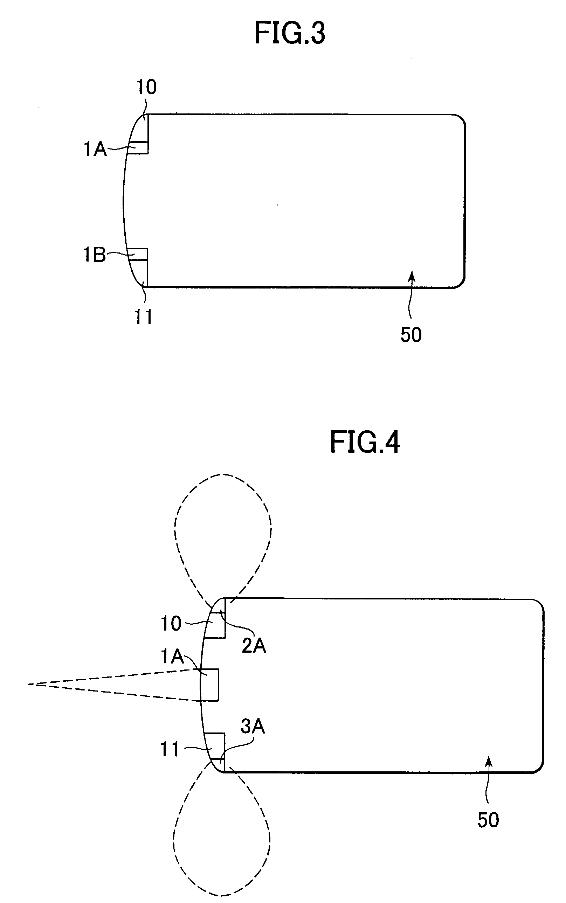

Further, near-range sensors 6, 7 are installed in respective side mirrors 21, 22. The term "far-range sensor" means a sensor capable of detecting a far distance with a small detection angle, and the term "near-range sensor" means a sensor adaptable for detecting a short distance with a large detection angle (see Fig. 4). By installing the far-range sensors 1, 1A and 1B in the front portion of the vehicle, a capability of detecting the front of the vehicle can be increased. Those range sensors may be each of any suitable type, for example, employing an ultrasonic wave and measuring the distance based on a time taken for a reflected wave from a target object to reach the vehicle, or employing a millimeter (extremely high frequency) wave radar sensor in the band of 76 GHz.

The arrangement of the plurality of range sensors may be modified as follows. More specifically, as shown in Fig. 2, near-range sensors 2, 3 may be installed respectively on the right and left sides in the front portion of vehicle with the far-range sensor 1 remaining installed at the center. Alternatively, as shown in Fig. 3, the far-range sensors 1A, 1B may be built in the respective headlamps 10, 11. This arrangement is advantageous in that reliability is not affected by weather, e.g., rain. A similar advantage can be obtained by installing the range sensors 4, 5 to be built in respective tail lamps (though not shown). Further, by operating wipers (not shown) attached to the headlamps 10, 11 in some of high-class vehicles, it is possible to suppress a reduction in accuracy of range detection caused by rain or snow. Alternatively, as shown in Fig. 4, near-range sensors 2A, 2B may be built in the respective headlamps 10, 11.

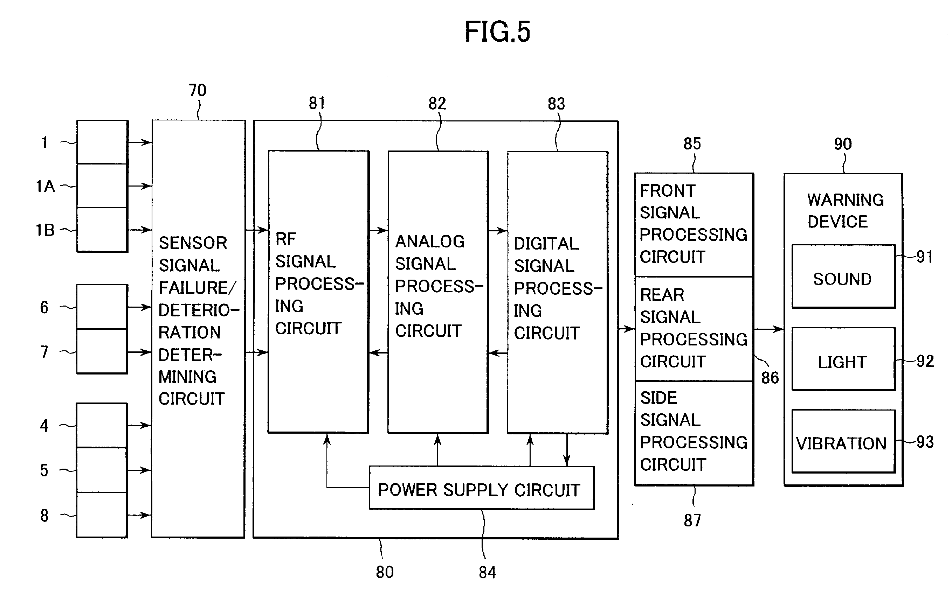

Next, a signal processing circuit constituting the apparatus for controlling the vehicle in combination with the plurality of range sensors will be described with reference to Fig. 5. Signals from the plurality of range sensors 1, 1A, 1B and 4 to 8 are inputted to a sensor signal failure/deterioration determining circuit 70, which allows only normal signals to be inputted to a sensor circuit 80. Also, the determining circuit 70 has a function of selecting optimum ones of the plurality of range sensors. The selected signals are outputted from the sensor circuit 80 to a front signal processing circuit 85, a rear signal processing circuit 86 and a side signal processing circuit 87, and then employed for respective control processes.

The sensor circuit 80 comprises an RF signal processing circuit 81, an analog signal processing circuit 82, a digital signal processing circuit 83, and a power supply circuit 84. Signals from the sensor signal failure/deterioration determining circuit 70 are inputted to the RF signal processing circuit 81, and then inputted to the analog signal processing circuit 82 and the digital signal processing circuit 83 in sequence. The signals processed in those circuits are returned to the RF signal processing circuit 81. The power supply circuit 84 supplies voltages to the circuits 81, 82 and 83.

Outputs from the front signal processing circuit 85, the rear signal processing circuit 86 and the side signal processing circuit 87 are inputted to a warning device 90. The warning device 90 is designed so as to generate sound 91, light 92 or vibration 93 and issue a warning to the driver when a target object, e.g., another vehicle, has come into or close to a danger detection area preset for the range sensors. As an alternative, the warning device 90 may issue a warning in any suitable combination of the sound 91, the light 92 and the vibration 93.

The operation of the apparatus for controlling the vehicle of this embodiment, having the above-described construction, will be described below. Main purposes for installing the plurality of range sensors in the vehicle as shown in Fig. 1 are to avoid a collision and to ensure safety in the event of a collision. In other words, even if a collision should be unavoidable, the vehicle must be controlled such that it collides against another vehicle from a safer direction. However, there occurs a mechanical time delay, after the detection, until a control signal is produced and the vehicle behavior is actually performed.

Assuming, for example, that the relative speed is 60 km/h, a distance of 3 m is converted into a time of 180 ms. This means that the control from the detection to the vehicle behavior must be carried out within 180 ms after the vehicle has come into an area corresponding to 3 m. To ensure safety in the event of a collision, it is essential to cut down the mechanical time delay. In addition, cutting down a time required for the detection is also essential. Stated otherwise, it is important to confirm the behavior of another oncoming vehicle before the collision and, particularly in the case of a side collision in which a collision energy absorber is insufficient, to make control for reducing collision damages upon the driver and other passengers within a time of about 30 ms that represents a period from collision detection to actuation of an air bag currently equipped as a collision safety device.

In view of the above, the three front range sensors 1, 1A and 1B are installed as shown in Fig. 1 and, if sensor signals from those three sensors are all normal, the sensor signal failure/deterioration determining circuit 70 selects the range sensor 1A on the same side as a steering wheel, and control is carried out using the signal, which has been selected with priority, thereby ensuring safety of the driver in the event of a collision. If the range sensor 1A on the same side as the steering wheel is failed, control is carried out using the range sensor 1 nearer to the driver with priority without using the range sensor 1B.

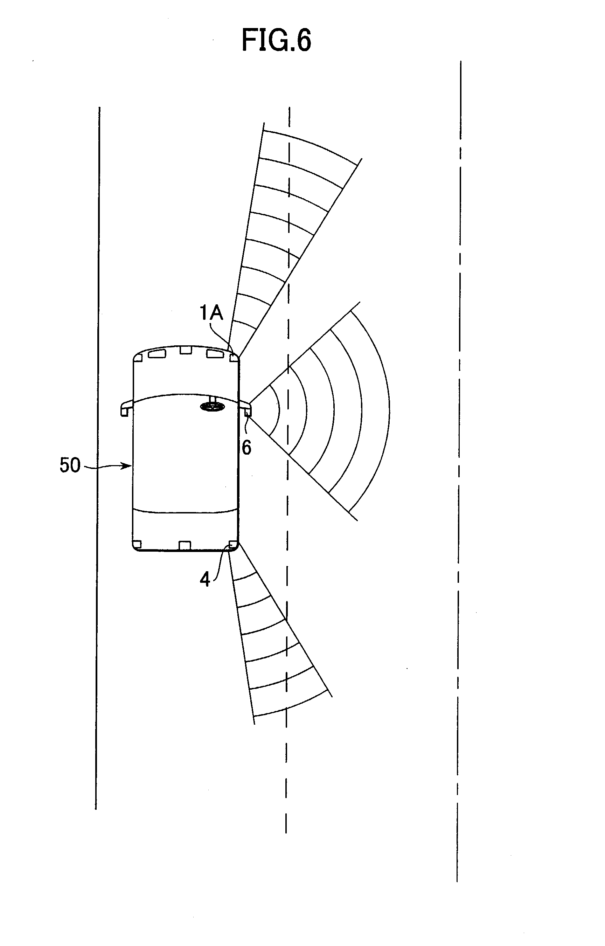

Through such signal processing, as shown in Fig. 6, when the vehicle changes a lane, control is carried out using the range sensors installed on the side closer to the lane, to which the vehicle is going to move, with priority. As a result, the signal processing time can be cut down and safety in the lateral direction is improved. For example, when the vehicle changes a lane to a right one, the range sensors 1A, 4 and 6 on the right side of the vehicle are used for control with priority. When the vehicle changes a lane to a left one, the range sensors 1B, 5 and 7 on the left side of the vehicle are used for control with priority.

Particularly, safety in the lateral direction is important. On condition that the near-range sensors 1A, 6 and 4 are installed on the right side of the vehicle and the near-range sensors 1B, 7 and 5 are installed on the left side as viewed in the running direction of the vehicle, if another vehicle approaches the relevant vehicle from the right in a perpendicular direction and the near-range sensors 1A, 6 and 4 are all normal, control is carried out using signals from the near-range sensors 1A, 6 and 4 on the side closer to another approaching vehicle with priority for cutting down the time required for determination to start the control to avoid a collision.

For ensuring safety in the event of a collision, it is important to notify the driver of a signal indicating a dangerous situation around the vehicle. Therefore, when another vehicle has come into or close to a danger detection area preset for the range sensors, the warning device 90 issues a warning to the driver using the sound 91, the light 92 and the vibration 93 as shown in Fig. 5. In response to the issued warning, the driver applies the brakes for deceleration and performs urgent steering to avoid a danger.

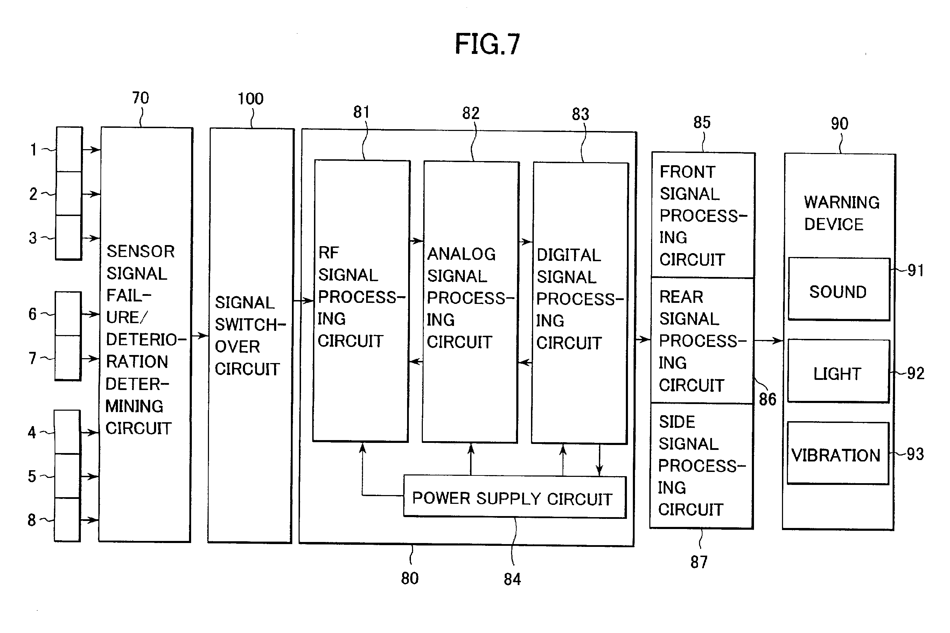

Next, another embodiment of the present invention will be described below with reference to Fig. 7. Fig. 7 is a block diagram of a signal processing circuit incorporated in the apparatus for controlling the vehicle according to the present invention and used in the vehicle of Fig. 2. Comparing with the above embodiment, this embodiment is featured in that a signal switchover circuit 100 is inserted after the sensor signal failure/deterioration determining circuit 70. Other essentially identical components are denoted by the same reference numerals and are not described here.

Referring to Fig. 7, when the far-range sensor 1 and the near-range sensors 2, 3 are installed in the front portion of the vehicle 50 as shown in Fig. 2, signals from the far-range sensor 1 and the near-range sensors 2, 3 installed in the front portion of the vehicle 50 are selectively inputted depending on a signal from a vehicle speed sensor. More specifically, as shown in Fig. 7, the signal switchover circuit 100 for switching over signals depending on the vehicle speed is inserted after the sensor signal failure/deterioration determining circuit 70, and the selected one or more signals are inputted to the sensor circuit 80.

In this embodiment, when the vehicle 50 is running at a high speed, for example, the sensor signal failure/deterioration determining circuit 70 selects the far-range sensor 1, which is used for control with priority. Hence, an allowance is given to the time taken to avoid a collision. Also, when the vehicle speed is low, the near-range sensors 2, 3 are used for control with priority. Accordingly, the distance between the vehicle 50 and the target object, such as another vehicle or an obstacle, can be detected with high accuracy and the determination to start the control to avoid a collision can be made with higher reliability.

Also in this embodiment, when any of the far-range sensors 1, 8 and the near-range sensors 2 to 7 are failed or their sensing characteristics are deteriorated, signals from only the far-range sensors, which are neither failed nor deteriorated, are selected by the sensor signal failure/deterioration determining circuit 70 and are used for control with priority. Further, when processing the signals from the range sensors 1 to 3, 4, 5 and 8 are in stalled in the front and rear portions of the vehicle, the signal processing is executed to carry out control using the signals from the far-range sensors installed nearer to the steering wheel with priority.

When processing the signals from the range sensors 6, 7 installed on both lateral sides of the vehicle, control is carried out using the signal of the range sensor with priority, which has sensed a shorter detection distance from a target object locating around the vehicle. When the vehicle changes a lane, the signal processing is executed to carry out control using the signal from the range sensor installed on the lateral side nearer to a lane, to which the vehicle is going to move, with priority.

This embodiment of the present invention has been described above in connection with the example, shown in Fig. 2, in which the near-range sensors 6, 7 are installed respectively in the side mirrors 21, 22. However, when the detection area can be covered by the near-range sensors 2, 3, 4 and 5 installed in the front and rear portions of the vehicle, the object of the present invention can be achieved without the near-range sensors installed in the side mirrors. Also, the range sensors used in the present invention may be optical sensors. As an alternative, infrared sensors for detecting animals at night may be used. Further, those different types of sensors may be used in combination.

In another example in which the far-range sensors 1A, 1B are installed in the front portion of the vehicle 50 in addition to the far-range sensor 1, the sensor signals may also be switched over depending on the vehicle speed. In this case, the sensor signals are switched over, for example, such that when the vehicle speed is high, the far-range sensor 1 at the center is used with priority to carry out control, and when the vehicle speed is low, the far-range sensors 1A, 1B on the right and left sides are used with priority to carry out control.

According to the apparatus for controlling the vehicle of the present invention, as will be understood from the above description, when a plurality of range sensors are employed, proper one or more of signals outputted from the plurality of range sensors are selected and used with priority for signal processing to carry out control. Therefore, vehicle control and issuance of a warning to the driver can be more quickly and more accurately performed. As a result, it is possible to provide an apparatus for controlling a vehicle, which can prevent a collision and ensure stable running without needing abrupt steering and abrupt braking.

## Claims

1. An apparatus for controlling a vehicle comprising a plurality of range sensors (1; 1A, 1B; 2-8) installed in an outer peripheral portion of a vehicle (50) for sensing a target object including another vehicle, comprising
a controller for carrying out control using, of signals outputted from said plurality of range sensors (1; 1A, 1B; 2-8), a signal from at least one range sensor with priority, which is neither failed nor deteriorated in sensor characteristics.

2. An apparatus for controlling a vehicle according to Claim 1, wherein said vehicle (50) includes a vehicle speed sensor, ones of said plurality of range sensors, which are installed in a front portion of said vehicle (50), comprise a far-range sensor (1) and a near-range sensor (2, 3), and said controller includes switchover means for switching over said far-range sensor (1) and said near-range sensor (2, 3) from one to the other depending on an output signal of said vehicle speed sensor when processing the signals outputted from said plurality of range sensors.

3. An apparatus for controlling a vehicle according to Claim 1, wherein the range sensors installed in front and rear portions of said vehicle are built in headlamps (10, 11) and tail lamps.

4. An apparatus for controlling a vehicle according to Claim 1, wherein said range sensors are optical sensors, radar sensors, or infrared sensors.

5. An apparatus for controlling a vehicle according to Claim 1, wherein a warning is issued to a driver when another target object comes into a danger detection area preset for said range sensors.

6. An apparatus for controlling a vehicle according to Claim 5, wherein the warning is issued to the driver using sound, light, vibration, or any suitable combination thereof.

7. An apparatus for controlling a vehicle comprising a plurality of range sensors (1; 1A, 1B; 2-8) installed in an outer peripheral portion of a vehicle (50) for sensing a target object including another vehicle, comprising
a controller for carrying out control using, of signals outputted from said plurality of range sensors, a signal from at least one range sensor with priority, which is positioned on the same side as a direction of turn of a steering wheel, when processing the signals from the range sensors installed in front and rear portions of said vehicle.

8. An apparatus for controlling a vehicle according to Claim 7, wherein said vehicle (50) includes a vehicle speed sensor, ones of said plurality of range sensors, which are installed in a front portion of said vehicle (50), comprise a far-range sensor (1) and a near-range sensor (2, 3), and said controller includes switchover means for switching over said far-range sensor (1) and said near-range sensor (2, 3) from one to the other depending on an output signal of said vehicle speed sensor when processing the signals outputted from said plurality of range sensors.

9. An apparatus for controlling a vehicle according to Claim 7, wherein the range sensors installed in front and rear portions of said vehicle are built in headlamps (10, 11) and tail lamps.

10. An apparatus for controlling a vehicle according to Claim 7, wherein said range sensors are optical sensors, radar sensors, or infrared sensors.

11. An apparatus for controlling a vehicle according to Claim 7, wherein a warning is issued to a driver when another target object comes into a danger detection area preset for said range sensors.

12. An apparatus for controlling a vehicle according to Claim 11, wherein the warning is issued to the driver using sound, light, vibration, or any suitable combination thereof.

13. An apparatus for controlling a vehicle comprising a plurality of range sensors (1; 1A, 1B; 2-8) installed in an outer peripheral portion of a vehicle (50) for sensing a target object including another vehicle, comprising
a controller for carrying out control using, of signals outputted from said plurality of range sensors (1; 1A, 1B; 2-8), a signal from at least one range sensor with priority, which has detected a shorter distance from said target object, when processing the signals from the range sensors installed on both lateral sides of said vehicle (50).

14. An apparatus for controlling a vehicle according to Claim 13, wherein said range sensors are optical sensors, radar sensors, or infrared sensors.

15. An apparatus for controlling a vehicle according to Claim 13, wherein a warning is issued to a driver when another target object comes into a danger detection area preset for said range sensors.

16. An apparatus for controlling a vehicle according to Claim 15, wherein the warning is issued to the driver using sound, light, vibration, or any suitable combination thereof.

17. An apparatus for controlling a vehicle comprising a plurality of range sensors (1; 1A, 1B; 2-8) installed in an outer peripheral portion of a vehicle (50) for sensing a target object including another vehicle, comprising
a controller for carrying out control using, of signals outputted from said plurality of range sensors (1; 1A, 1B; 2-8), a signal from at least one range sensor with priority, which is installed on the lateral side of said vehicle nearer to a lane to which said vehicle is going to move, when said vehicle changes a lane.

18. An apparatus for controlling a vehicle according to Claim 17, wherein said range sensors are optical sensors, radar sensors, or infrared sensors.

19. An apparatus for controlling a vehicle according to Claim 17, wherein a warning is issued to a driver when another target object comes into a danger detection area preset for said range sensors.

20. An apparatus for controlling a vehicle according to Claim 19, wherein the warning is issued to the driver using sound, light, vibration, or any suitable combination thereof.
